# EUROPEAN PATENT SPECIFICATION

(11) **EP 3 711 916 B1**
(45) Date of publication and mention of the grant of the patent: **03.04.2024**
(21) Application number: 18879486.1
(22) Date of filing: 27.02.2018
(51) Int. Cl.: B28B 1/00, B28B 3/12, B28B 5/02, B28B 5/04, B28B 11/00, B28B 11/04, B28B 13/02, B28B 17/00, B29C 67/24, B30B 15/30, B30B 5/06, B44F 9/04

(54) **INTERLAYER MIXING APPARATUS FOR TEXTURING MAN-MADE STONE SLABS**
ZWISCHENSCHICHTMISCHVORRICHTUNG ZUM TEXTURIEREN VON KUNSTSTEINPLATTEN
APPAREIL DE MÉLANGE INTER-COUCHE POUR LA TEXTURATION DE DALLES DE PIERRE ARTIFICIELLES

(30) Priority: 17.11.2017 CN 201711142295
(43) Date of publication of application: 23.09.2020
(73) Proprietor: VEEGOO TECHNOLOGY CO., LTD., Guangdong 528000 (CN)
(72) Inventor: QIU, Jianping, Foshan Guangdong 528000 (CN); ZHU, Shiyang, Foshan Guangdong 528000 (CN); PAN, Yexin, Foshan Guangdong 528000 (CN)
(74) Representative: Vitina, Maruta
(86) International application number: PCT/CN2018/077367
(87) International publication number: WO 2019/095583

(56) References cited:
- WO-A1-2009/102091
- WO-A1-2016/113652
- CN-A- 1 864 969
- CN-A- 101 879 749
- CN-A- 107 336 327
- CN-U- 206 511 575
- CN-U- 206 511 575
- US-A1- 2004 032 044

## Description

### TECHNICAL FIELD

The present application relates to an apparatus for texture processing of artificial stones, and more particularly to an interlayer mixing apparatus for the texture processing of artificial stone slabs.

### BACKGROUND

Artificial quartz stones are composed of more than 90% of natural quartz and about 10% of colourants, resins and other additives that adjust adhesion, curing, etc. The artificial quartz stones usually are slabs produced by vacuum processing, high-frequency vibration moulding and thermal curing.

A US 2004/032044 A1 application discloses an interlayer mixing apparatus for texture processing of artificial stone slabs according to the preamble of claim 1 and a method for the manufacture of slab-type products in which an initial mix-formed by a granulate and by a binder-is deposited on a temporary support and then subjected to vibrocompaction under vacuum and conveyed away for the hardening stages, before vibrocompaction a dye is deposited on the surface of the mix layer with a random and patch-like layout before the vibrocompaction step. A CN 101879749 A application discloses a ceramic tile micropowder distributing method which includes the following steps of: 1. a secondary bottom material-distributing working procedure; 2. a reversely beaten micropowder distributing process ; 3. a line distributing process; 4. a distributing step by a special distributing device, wherein the special distributing device comprises an oblique conveying belt mechanism, a line screening mechanism, a roller mechanism, a vibrating screen device and a gate device, wherein the oblique conveying belt mechanism is arranged on a stand, the line screening mechanism, the roller mechanism, the vibrating screen device and the gate device are arranged on the oblique conveying belt mechanism, a powder tiling device is arranged above a transverse conveying belt mechanism behind the gate device, the powder tiling device is in driving connection with a vibration compressing device and a grid feeding device, the oblique conveying belt mechanism is in driving connection with the transverse conveying belt mechanism, a glass matched gate device is arranged below the roller mechanism, a leveling and supplementing device is arranged between the gate device and the powder tiling device, and a connecting glass mechanism and a base material large hopper mechanism are sequentially arranged behind the grid feeding device; and 5. a distributing flow: distributing a peak zone, supplementing, distributing tiled powder, converting the angle of a tiled powder zone into vertical layer-shaped arrangement, distributing fixed grids, supplementing the base materials and conveying to a pressing machine. A PCT WO2016/113652 A1 application discloses a station for the realization of coloring effects in a mix for the production of slabs, comprising: - a working surface intended to accommodate a temporary support with a basic mix layer for the formation of a slab; - at least one dye dispensing device for emitting dyes towards the working surface so as to deposit them on the basic mix layer on the temporary support accommodated on the working surface - movement means for the relative movement of the dispensing device above the working surface - a control system connected to the movement means for controlling the displacement of the dispensing device on the working surface so as to follow trajectories along which dyes are emitted towards the mix layer; - at least one tool movable with the movement means and intended to interact mechanically with areas of the mix layer on the temporary support accommodated on the working surface which receive or are intended to receive the dyes emitted by the dispensing device to achieve coloring effects in the mix

In the existing manufacturing process of artificial quartz, in order to ensure the artificial quartz to be similar to natural stone in the texture direction, it is required to introduce a texture mould frame in the material distribution process and then remove the texture mould frame after the distribution to enable the distributed material to present the desired texture line. However, this process has the following disadvantages.
1. There is one-to-one correspondence between the texture mould frame and the texture line effect, so it is required to renew the texture mould frame to present a different texture line effect.
2. The process of filling the texture line with colourants can only be manually completed, failing to achieve the automatic production.
3. This process can merely provide single texture effect, and fails to arrive at a gradient texture effect of a combination of multiple colourants, leading to large difference between the manufactured product and natural stone in the texture.

### SUMMARY

In order to overcome the above-mentioned defects in the prior art, the present disclosure provides an interlayer mixing apparatus for texture processing of artificial stone slabs.

The technical solutions of the disclosure are described as follows.

The invention is as defined in the appended set of claims. Any examples and contents that do not completely correspond to the scope of the claims are only for illustrative purpose, or to highlight the effect of a particular aspect or feature.

The present disclosure provides an interlayer mixing apparatus for texture processing of artificial stone slabs, comprising:
a rack;
a pressing component;
a colourant distribution component;
a stirring component;
a travelling component; and
a control system;
wherein a slab material is successively transported via a conveyor belt sequentially to working areas of the pressing component, the colourant distribution component and the stirring component, the rack has a platform to carry the slab material, and the pressing component, the colourant distribution component, the travelling component and the stirring component are respectively connected to the control system;
the control system adjusts the pressing component such that the pressing component presses to the slab material; the colourant distribution component distributes at least one layer of a colourant to a surface of the slab material after pressed, or according to a design path for a final texture, distributes at least one layer of the colourant at corresponding positions on the surface of the slab material;
the control system adjusts the travelling component and the stirring component such that the travelling component drives the stirring component to move above the pressed slab material according to the design path for the final texture, and at the same time, the stirring component stirs the colourant and mixtures of the slab material at all corresponding positions or a part of the corresponding positions on the surface of the slab material.

The pressing component and the stirring component are respectively arranged at two independent stations; the colourant distribution component distributes colourant to the surface of the pressed slab material before the pressed slab material enters a working area of the stirring component..

The colourant distribution component is arranged on a conveying path of the conveyor belt, and the colourant distribution component comprises a colourant distribution hopper, a discharge roller and a sieve; the discharge roller is arranged at an outlet of the colourant distribution hopper to drive the colourant to fall to the surface of the pressed slab material in the conveyor belt; the sieve is arranged below the discharge roller; and the control system drives the discharge roller to rotate.

The travelling component is an XYZ three-axis drive device, and is capable of driving the stirring component to reciprocate along an X, Y or Z direction with respect to the rack; and the XYZ three-axis drive device is electrically connected to the control system;
the stirring component comprises a stirring blade and a drive device, and the drive device drives the stirring blade to rotate in a vertical plane;
the drive device comprises a spindle drive motor, a stirring spindle, a spindle reducer, a hollow rotating table and a C-axis motor; wherein the spindle drive motor drives the stirring spindle to rotate; the stirring spindle passes through the hollow rotating table and drives an output shaft of the spindle reducer to rotate; the output shaft of the spindle reducer is arranged horizontally, and drives the stirring blade to rotate in a vertical plane;
the C-axis motor is arranged on a side of the stirring spindle, and an output shaft of the C-axis motor drives the spindle reducer to rotate with respect to the stirring spindle, and the stirring blade rotates with the spindle reducer with respect to the stirring spindle.

In an embodiment, the pressing component comprises a material distribution belt for flattening and storing the slab material, a rolling belt and a travelling mechanism; the material distribution belt and the rolling belt are arranged on the travelling mechanism, and the rolling belt is arranged below the material distribution belt;
the travelling mechanism is arranged above a material distribution platform and is capable of reciprocating; and the rolling belt pushes and squeezes the slab material on the material distribution platform.

In an embodiment, the colourant distribution component and the stirring component are arranged at the same station.

In the above-mentioned technical solution, the pressing component and the stirring component are arranged at two relatively independent stations, and the two stations are connected via the conveyor belt, the slab material is driven by the conveyor belt to move to a working area of the pressing component, and the pressing component applies a certain squeezing force to the slab materials. Then the colourant distribution component distributes at least one layer of colourant to the surface of the slab material, or distributes at least one layer of colourant evenly or unevenly at corresponding positions on the surface of the slab material according to the design path for the final texture. After the distribution is completed, the slab material is transported to a working area of the stirring component, and the travelling component drives the stirring component to move along an extension path of the final texture, and at the same time, the stirring component mixes the colourants with the slab material at the corresponding positions on the texture of the slab material. The stirring depth can be the same as the thickness of the entire slab material. There is a chromatic difference between stirred positions and unstirred positions, besides, the stirring allows the colourants to penetrate into the slab material, providing a transparent texture effect on the surface of the slab material after the texture processing and subsequent curing, pressing, thickness calibrating and other processes are completed is produced.

A certain pressing force is applied to the slab material via the pressing component before the stirring to enable the stirring to occur between compact slab material and the colourants. The slab material at a position where the stirring is performed becomes loose again, while the slab material in adjacent positions without undergoing stirring are compact due to the previous pressing, thereby forming a large barrier to stop the penetration of the colourants. Therefore, the colourants are kept in the stirred positions, so that a boundary of the texture on the final product is clearer and more complete from the macroscopic view. Besides, the product not only has good consistency between upper textures and lower textures and good texture transparency, but also has a clear texture effect at the surface and the bottom, achieving the natural fissure effect.

### BRIEF DESCRIPTION OF THE DRAWINGS

FIG 1 is a schematic diagram of an interlayer mixing apparatus for texture processing of artificial stone slabs according to an embodiment of the present disclosure, in which a stirring component and a pressing component are not arranged at the same station.
FIG 2 is a schematic diagram of the interlayer mixing apparatus for texture processing of artificial stone slabs according to an embodiment of the present disclosure not forming part of the invention, in which the stirring component and the pressing component are arranged at the same station.
FIG 3 is a side view of a colourant distribution component according to a first embodiment of the present disclosure.
FIG 4 is a front view of the colourant distribution component according to the first embodiment of the present disclosure.
FIG 5 is a schematic diagram of a travelling component according to an embodiment of the present disclosure.
FIG 6 is a perspective view of the stirring component according to an embodiment of the present disclosure.
FIG 7 is a front view of the stirring component according to the embodiment of the present disclosure.
FIG 8 is a side view of the stirring component according to the embodiment of the present disclosure.
FIG 9 is a side view of a stirring blade according to an embodiment of the present disclosure.
FIG 10 is a front view of the stirring blade according to the embodiment of the present disclosure.
FIG 11 is a perspective view of the stirring blade according to another embodiment of the present disclosure.

In the drawings, 1, travelling component; 12, spindle mounting plate; 13, drive reducer; 14, drive gear; 15, drive gear rack; 16, Z-direction drive reducer; 17, screw assembly; 18, Z-direction mounting plate; 19, fast travelling mechanism; 191, linear rail slider assembly;
2, stirring component; 21, stirring blade; 211, blade bar; 212, blade body; 22, stirring spindle; 23, spindle drive device; 231, spindle drive motor; 232, spindle reducer; 233, hollow rotating table; 234, C-axis motor; 24, material-returning scraper;
3, rack;
4, colourant distribution component; 41, colourant distribution hopper; 42, discharge roller; 43, sieve; 5, pressing component; 51, pressing roller; 52, roller base; 53, material distribution belt; 54, rolling belt; 55, travelling mechanism.

### DETAILED DESCRIPTION OF EMBODIMENTS

The present disclosure will be further described in detail below with reference to the accompanying drawings and embodiments.

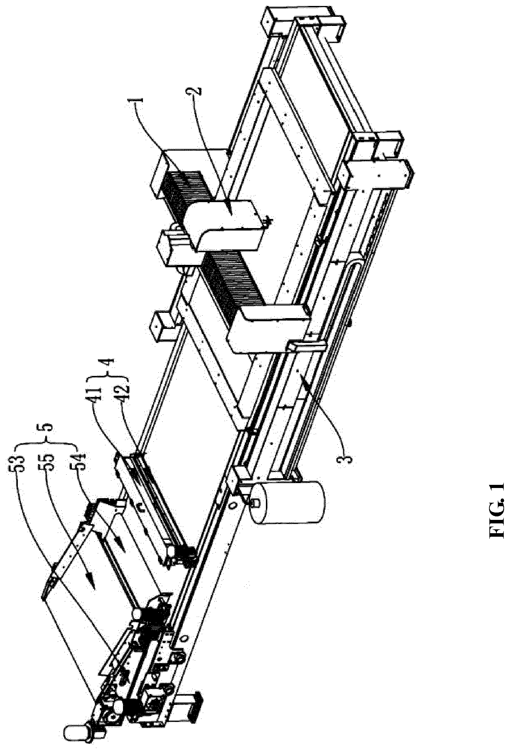

Fig. 1 schematically shows an interlayer mixing apparatus for texture processing of artificial stone slabs according to an embodiment of the present disclosure, including a pressing component 5, a colourant distribution component 4, a stirring component 2, a travelling component 1 and a control system; where a slab material is transported via a conveyor belt sequentially to working areas of the pressing component 5, the colourant distribution component 4 and the stirring component 2, and the pressing component 5, the colourant distribution component 4, the travelling component 1 and the stirring component 2 are respectively connected to the control system;
the control system adjusts the pressing component 5 such that the pressing component presses to the slab material; the colourant distribution component 4 distributes at least one layer of a colourant to a surface of the slab material after pressed by the pressing component, or according to a design path for a final texture, distributes at least one layer of the colourant at corresponding positions on the surface of the slab material;
the control system adjusts the travelling component 1 and the stirring component 2 such that the travelling component 1 drives the stirring component 2 to move above the pressed slab material according to the design path for the final texture, and at the same time, the stirring component 2 stirs mixtures of the colorant and the slab material at all corresponding positions or a part of the corresponding positions on the surface of the slab material.

In the above-mentioned technical solution, the pressing component 5 and the stirring component 2 are arrange at a same station (embodiment not forming part of the invention), or respectively arranged at two independent stations, where the two stations are connected via the conveyor belt. Driven by the conveyor belt, the artificial stone slate firstly moves to a working area of the pressing component 5, and the pressing component 5 applies a certain pressing force to the slab material; secondly, the colourant distribution component distributes at least one layer of the colourant to the surface of the slab material, or distributes at least one layer of the colourant evenly or unevenly at the corresponding positions on the surface of the slab material according to the design path for the final texture; after the colourant distribution is completed, the slab material is driven to the working area of the stirring component, and the travelling component drives the stirring component to move along an extension path of the final texture, at the same time, the stirring component mixes the colourants with the slab material at the corresponding positions on the texture of the artificial stone slabs. The stirring depth can be the same as the thickness of the entire slab material. There is a chromatic difference between stirred positions and unstirred positions; besides, the stirring allows the colourants penetrate into the slab material, providing a transparent texture effect on the surface of the slab material after the texture processing and subsequent curing, pressing, thickness calibrating and other processes are completed is produced.

A certain pressing force is applied to the slab material via the pressing component 5 before the stirring to enable the stirring to occur between compact slab material and the colourants. The slab material at the stirred positions becomes loose again, while the slab material in adjacent positions without undergoing stirring are compact due to the previous pressing, thereby forming a large barrier to stop the penetration of the colourants. Therefore, the colourants are kept in the stirred positions, so that a boundary of the texture on the final product is clearer and more complete from the macroscopic view. Besides, the product not only has good consistency between upper textures and lower textures and good texture transparency, but also has a clear texture effect at the surface and the bottom, achieving the natural fissure effect.

The specific arrangement of the pressing component and the stirring component is described below with reference to the two embodiments.

### Embodiment 1

As shown in Fig. 1, the pressing component 5 and the stirring component 2 are respectively arranged at two relatively independently stations. Before the pressed slab material enters the working area of the stirring component, the colourant distribution component distributes colourants to the surface of the slab material.

The pressing component 5 and the stirring component 2 are respectively arranged at two relatively independent stations. The slab material sequentially passes through working areas of the two components to complete corresponding treatment. Compared with the arrangement not forming part of the invention in which the two components are arranged at the same station, the arrangement provided herein can reduce the retention time of the slab material in one station, that is, reduce the waiting time of the next slab material to be processed, reducing the time consumption and improving the production efficiency. In addition, the two relatively independent stations can be flexibly combined and arranged according to process requirements, and several additional pressing components 5 and/or stirring components 2 can be arranged therebetween according to actual requirements, thereby producing various texture effects.

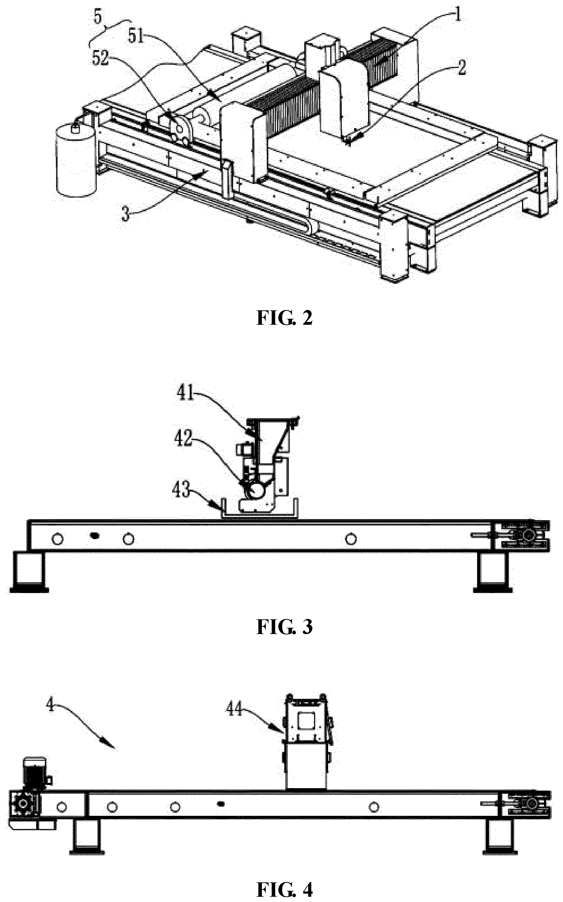

Referring to Figs. 3-4, there is provided an embodiment of the arrangement of the colourant distribution component (i.e., the first embodiment of the colourant distribution component), in which the colourant distribution is performed by a common dusting method. The colourant distribution component is arranged on a conveying path of the conveyor belt, and includes a colourant distribution hopper 41, a discharge roller 42 and a sieve 43, where the discharge roller 42 is arranged at an outlet of the colourant distribution hopper 4 to drive the colourants to fall to the surface of the slab material on the conveyor belt. The sieve 43 is arranged below the discharge roller 42, and the control system drives the discharge roller 42 to rotate.

The colourant distribution component 4 keeps immobile on the rack 3, and the slab material is continuously driven by the conveyor belt. When the slab material moves to the colourant distribution component 4, the control system drives the discharge roller 42 to rotate such that the colourants in the colourant distribution hopper 41 naturally falls to the surface of the slab material, completing the colourant distribution.

The colourant distribution component 4 can distribute at least one layer of the colourant onto the entire surface of the slab material. The sieve 43 is arranged below the discharge roller 42 to finally filter the colourants to ensure that the colourants falling to the slab material are free of large clumps, allowing for better colourant distribution effect.

As shown in Fig. 1, the pressing component 5 provided in this embodiment includes a material distribution belt 53 for flattening the slab material, a rolling belt 54 and a travelling mechanism 55. The material distribution belt 53 and the rolling belt 54 are arranged on the same travelling mechanism 55, and the rolling belt 54 is arranged below the material distribution belt 53.

The travelling mechanism 55 is arranged above a material distribution platform and is capable of reciprocating, and the rolling belt 54 pushes and squeezes the slab material on the material distribution platform during the motion.

After enough slab material is placed on the material distribution belt 53, the travelling mechanism 55 drives the material distribution belt 53 and the rolling belt 54 to move forward over the material distribution platform. As the material distribution belt 53 moves forward, mortar materials on the material distribution belt 53 falls to the rolling belt 54, and is transported forward to fall to a mould on the material distribution platform. A height difference between the rolling belt 54 and the material distribution platform is adjusted such that the rolling belt 54 pushes and squeezes the mortar materials during the material distribution process, so that the mortar materials are continuously squeezed toward side walls of the mould to eliminate the gaps therein, and the mortar material around the mould is moulded by extrusion. The embodiment can simultaneously perform the distribution and forming processes in the prior art, improving the work efficiency and allowing for improved forming quality of the slab material due to no requirement of multiple transfers of the slab material.

### Embodiment 2

In this embodiment, the colourant distribution component 4 and the stirring component provided herein may be arranged at the same station.

The processes of colourant distribution and stirring are completed in the same station, and the pressing component can also be arranged in the same station, or arranged relatively independently in another station, thereby reducing the transfer of slab material between different processes and saving time.

In the embodiment, the interlayer mixing apparatus is further provided a rack 3, having a platform to carry the slab material.

As shown in Fig. 2, the pressing component 5 is slidably arranged on the rack 3 along a conveying direction of the slab material, which includes a pressing roller 51 and a roller base 52. A length direction of the pressing roller 51 is perpendicular to the conveying direction of the slab material. Two ends of the pressing roller 51 are rotatably arranged on the roller base 52, and the roller base 52 is arranged on the rack 3 via a wheel, so that the pressing roller 51 can roll over an end face of the slab material to squeeze the slab material when the pressing component 5 slides along the conveying direction.

Specifically, as shown in Fig. 2, the travelling component 1 is an XYZ three-axis drive device and capable of driving the stirring component 2 to reciprocate along the X-axis, Y-axis or Z-axis direction with respect to the rack 3, and the XYZ three-axis drive device is electrically connected to the control system.

The stirring component 2 includes a stirring blade 21 and a drive device 22, and the drive device 22 drives the stirring blade 21 to rotate in a vertical plane.

In the embodiment, the travelling component 1 is a drive device with degrees of freedom in the three directions of X axis, Y axis and Z axis. Any conventional structure capable of driving the stirring component 2 to reciprocate in the above three directions should fall within the scope of the present disclosure. The conventional structure includes motors, cylinders, gear racks, slide rails and sliders, cams, sprockets and screw rods and a combination thereof.

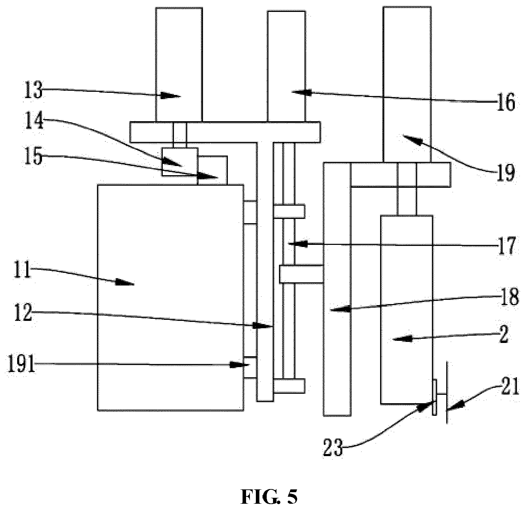

An embodiment of the travelling component 1 is described as follows. As shown in Fig. 5, the travelling component 1 includes a travelling frame 11, an X-direction drive component, a Y-direction drive component, a Z-direction drive component and a spindle mounting plate 12, where the X-direction drive component, the Y-direction drive component and the Z-direction drive component are electrically connected to the control system, respectively. The X-direction drive component drives the travelling frame 11 to reciprocate in the X direction with respect to the rack 3. The stirring component 2 is arranged on the travelling frame 11 via the spindle mounting plate 12, and the Y-direction drive component drives the spindle mounting plate 12 to reciprocate in the Y direction with respect to the rack 3. The stirring component 2 is arranged on the spindle mounting plate 12 via the Z-direction drive component, and is driven by the Z-direction drive component to reciprocate in the Z direction.

Specifically, the X-direction drive component and the Y-direction drive component both include a drive reducer 13, a drive gear 14 and a drive gear rack 15. In the X-direction drive component, the drive gear rack 15 is arranged on the rack 3 and extends along the X axis direction; the drive reducer 13 and the drive gear 14 are mounted on the travelling frame 11; the drive reducer 13 drives the drive gear 14 to rotate and reciprocate along the drive gear rack 15. As for the Y-direction drive component, the drive gear rack 15 is arranged on the travelling frame 11 and extends along the Y-axis direction; the drive reducer 13 and the drive gear 14 are mounted on the spindle mounting plate 12; and the drive reducer 13 drives the drive gear 14 to rotate and reciprocate along the drive gear rack 15. The Z-direction drive component includes a Z-direction drive reducer 16, a screw assembly 17 and a Z-direction mounting plate 18, where the stirring component 2 is arranged on the Z-direction mounting plate 18; the Z-direction mounting plate 18 is fixedly connected to the screw assembly 17 via nuts; and the screw assembly 17 is rotatably arranged on the spindle mounting plate 12 and extends along the Z axis direction, and is driven by the Z-direction drive reducer 16 to rotate. The screw assembly 17 is used for finely adjusting the moving positions, achieving the accurate positioning. Further, a fast travelling mechanism 19 is arranged above the spindle mounting plate 12 for driving the stirring component 2 to move up and down quickly in a vertical direction, that is, when a stirring spindle 222 is out of operation, the fast travelling mechanism 19 can drive the stirring component 2 to rise and reset quickly. When the stirring spindle 222 is in operation, the fast travelling mechanism 19 can drive the stirring component 2 to move downward to a position close to a processing surface quickly, and then the Z-direction drive component drives the spindle mounting plate 12 to move downward, so that the stirring blade 21 accurately reaches the processing position, thereby improving the processing efficiency and accuracy. The fast travelling mechanism 19 can be air cylinder, oil cylinder, gear, cam, sprocket or a combination thereof.

Preferably, the drive gear 14 and the drive gear rack 15 herein are respectively a helical gear and a helical gear rack. Since the helical gear rack has a large teeth contact ratio, the force applying to each gear is reduced, thereby making the drive gear 14 and the drive gear rack 15 more durable and allowing for stable transmission and lowered noise. In order to further improve a stability of movements in all directions, a linear guide rail-slider assembly 191 is arranged at connecting positions respectively between the travelling frame 11 and the rack 3 and between the travelling frame 11 and the spindle mounting plate 12, where the linear guide rail have a low moving frictional resistance, small wear after a long working time and good accuracy.

The colourant distribution component 4 distributes at least one layer of the colourant to the surface of the slab material, or distributes at least one layer of the colourant at corresponding positions on the surface of the slab material according to the design path for the final texture. When the drive device 22 drives the stirring blade 21 to rotate in the vertical plane to pass through the slab material placed horizontally, the colourants and the mixtures of the slate materials are mixed with a tangential force of the stirring blade 21. The stirring depth can be as large as the thickness of the entire slab material. There is a chromatic difference between stirred positions and unstirred positions, and the stirring enables the colourants to penetrate into the mixtures of the slab material, which facilitates the formation of transparent texture on the surface of the slab material after the texture processing and subsequent curing, pressing, thickness calibrating and other processes are completed.

Compared with the manner of stirring the colourants and the material mixtures via a rotation force perpendicular to the slab material, the method of stirring the colourants and the mixtures of the slab material with the tangential force adopted herein can obtain a finer stirring path. Specifically, a stirring path obtained by tangential force has a width as large as the blade thickness, while a stirring path obtained by the rotation force perpendicular to the slab material has a width twice as large as the blade width. Therefore, no matter how to adjust blade width, the technical solution in the present disclosure has outstanding advantages in obtaining a finer texture, actually, the stirring blade 21 cannot be made too thin to obtain a fine texture, because the reduction in the width will weaken the strength of the stirring blade, allowing the stirring blade to be prone to fracture when stirring the mixtures with a certain adhesion force.

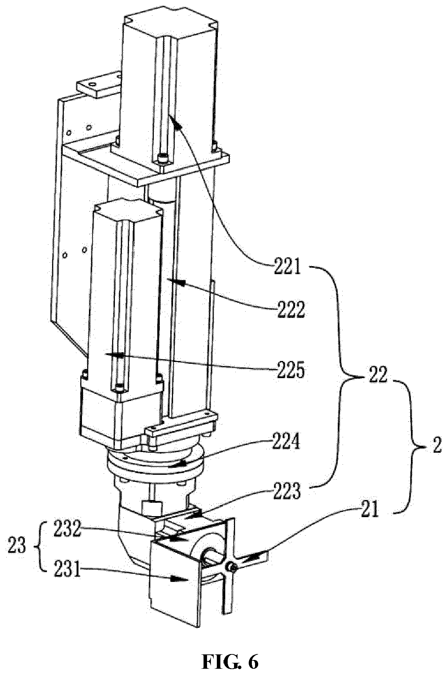

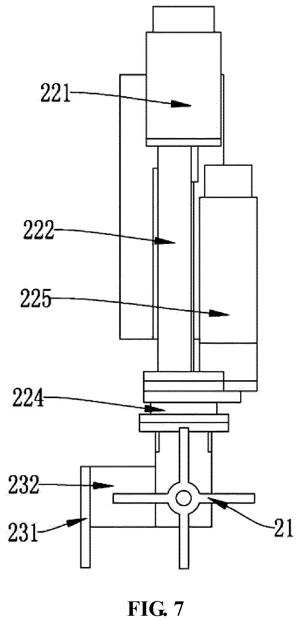

As shown in Figs. 6-8, the drive device 22 includes a spindle drive motor 221, a stirring spindle 222, a spindle reducer 223, a hollow rotating table 224 and a C-axis motor 225, where the spindle drive motor 221 drives the stirring spindle 222 to rotate; the stirring spindle 222 passes through the hollow rotating table 224 and drives an output shaft of the spindle reducer 223 to rotate; the output shaft of the spindle reducer 223 is arranged horizontally, and drives the stirring blade 21 to rotate in the vertical plane.

The C-axis motor is arranged on a side of the stirring spindle 222, and its output shaft drives the spindle reducer 223 to rotate with respect to the stirring spindle 222, which indicates that the stirring blade 21 rotates with the spindle reducer 223 with respect to the stirring spindle 222.

The stirring blade 21 is driven by the spindle drive motor 221 to rotate, the stirring spindle 222 and the spindle reducer 223. The output shaft of the spindle reducer 223 is arranged horizontally, and drives the stirring blade 21 to rotate horizontally. When the stirring blade 21 horizontally stirs the slab material, the slab material will be raised, and then fall back to the stirring positions, that is, the stirring blade 21 plays a role not only in stirring the materials, but also in performing backfill, avoiding the density reduction and hole formation due to lack of materials at the position where the texture is formed.

The moving path of the stirring blade 21 is determined according to the preset texture path. When the stirring blade 21 moves to a corner of the path, the C-axis motor 225 drives the hollow rotating table 224 to rotate, where an angle of the rotation is determined by an angle of the corner of the preset texture path. The rotation of the hollow rotary table 224 drives the stirring blade 21 to rotate to ensure that a cutting direction of the stirring blade 21 is always tangent to the moving path when turning, allowing for smooth movement at the corner in the moving path of the stirring blade.

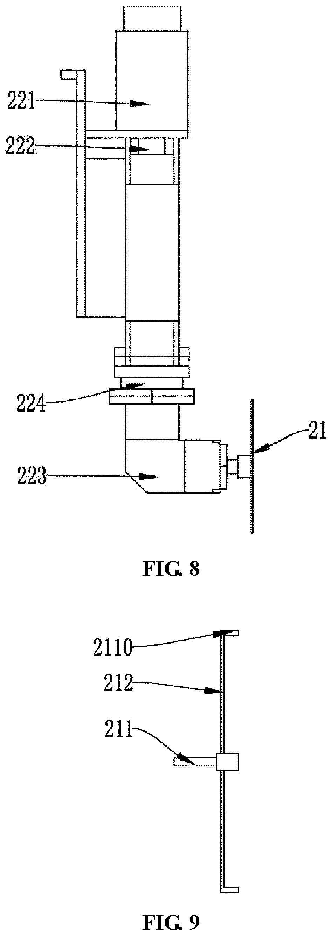

As shown in Figs. 9-10, the stirring blade 21 includes a blade bar 211 and a plurality of blade bodies 212, where the blade bar 211 and the plurality of the blade bodies 212 are combined into a completely detachable petal structure. One end of the blade bar 211 is located at a center of the petal structure, and the other end extends outward in a direction perpendicular to an end surface of the blade bodies 212. An end of each of the blade bodies 212 extends divergently outward from the center of the petal structure.

By replacing the blade bodies 212 and the blade bar 211 with different specifications, petal-type blades of various diameters can be assembled to meet the stirring needs of various texture effects.

The blade bodies 212 are in a sheet shape, where all end surfaces of the blade bodies 212 are in the same plane, and a middle portion of each of the blade bodies 212 is detachably arranged at an end of the blade bar 211 via bolts.

A free end of each of the blade bodes 212 is bent toward a side away from the blade bar 211 to form a bending portion 2110.

The blade bodies 212 are in a sheet shape, where all end surfaces of the blade bodies 212 are in the same plane, so that a fine texture can be obtained after the cutting of the slab material by stirring. In addition, an end of each of the blade bodies 212 can also be manufactured to have a bending portion (i.e., the free end of each of the blade bodies 212 is provided with a bending portion 2110), allowing for a larger stirring range.

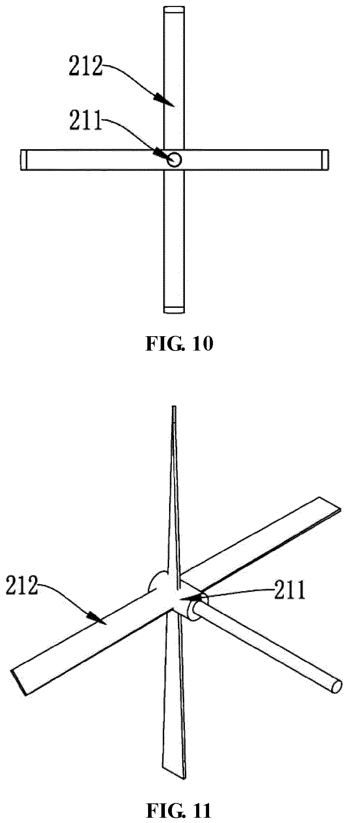

As shown in Fig. 11, the blade bodies 212 are in a sheet shape, where all end surfaces of the blade bodies 212 are parallel to an extension direction of the blade bar 211, and an end of each of the blade bodies 212 is detachably inserted into an outer side wall of the blade bar 211.

The blade bodies 212 are in a rectangular sheet shape or a wedge-shaped sheet shape or a sheet shape whose outer contour is composed of spiral curves.

As shown in Fig. 6, a material-returning scraper 24 is provided on a rear side of the stirring blade 21, where the material-returning scraper 23 is arranged at a front end of the spindle reducer 223, and its plate surface is perpendicular to a rotation plane of the stirring blade 21.

When the stirring blade 21 rotates to stir the slab material, a part of the slab material will be scattered outside a set range of the texture stripes. Through the material-returning scraper 23 arranged on the rear side of the stirring blade 21, the outside slab material is scraped to backfill into the set range of texture stripes. A distance between the material-returning scraper 23 and an end surface of the slab material can be adjusted to control the backfilling amount of material, thereby improving efficiency.

The material-returning scraper 23 has an angular structure composed of a scraping plate 231 and a fixed plate 232, where the fixed plate 232 is arranged on the spindle reducer 223, so that the scraping plate 231 is located on the rear side of the stirring blade 21.

The material-returning scraper 23 has a simple structure, and is easy to install and use.

An arrangement height of the material-returning scraper 23 on the spindle speed reducer 223 is adjustable.

In order to make the arrangement height of the material-returning scraper 23 adjustable, a plurality of buckles can be provided along the height direction, so that the material-returning scraper 23 can be fixed at different buckles to achieve the height adjustment. The adjustment may also be accomplished by gear racks or rail-slider assemblies involving automatic accessories such as motors and cylinders. It is apparent that the height adjustment structures commonly used by those skilled in the art should fall within the scope of the present disclosure.

## Claims

1. An interlayer mixing apparatus for texture processing of artificial stone slabs, comprising:
a rack (3);
a conveyor belt;
a pressing component (5);
a colourant distribution component (4);
a stirring component (2);
a travelling component (1); and
a control system;
wherein the conveyor belt is configured to transport a slab material a sequentially to working areas of the pressing component (5), the colourant distribution component (4) and the stirring component (2); the rack (3) has a platform to carry the slab material, and the pressing component (5), the colourant distribution component (4), the travelling component (1) and the stirring component (2) are respectively connected to the control system;
the control system is configured to adjust the pressing component (5) such that the pressing component (5) presses the slab material; the colourant distribution component (4) is configured to distribute at least one layer of a colourant to a surface of the slab material after being pressed by the pressing component (5), or according to a design path for a final texture, is configured to distribute at least one layer of the colourant at corresponding positions on the surface of the slab material;
the control system is configured to adjust the travelling component (1) and the stirring component (2) such that the travelling component (1) drives the stirring component (2) to move above the pressed slab material according to the design path for the final texture, and at the same time, the stirring component (2) is configured to stir mixtures of the colourant and the slab material at all corresponding positions or a part of the corresponding positions on the surface of the slab material;
the pressing component (5) and the stirring component (2) are respectively arranged at two independent stations; the colourant distribution component (4) is configured to distribute the colourant to the surface of the pressed slab material before the pressed slab material enters a working area of the stirring component (2);
the colourant distribution component (4) is arranged on a conveying path of the conveyor belt, **characterized in that** 2. the colourant distribution component (4) comprises a colourant distribution hopper (41), a discharge roller (42) and a sieve (43); the discharge roller (42) is arranged at an outlet of the colourant distribution hopper (41) to drive the colourant to fall to the surface of the pressed slab material on the conveyor belt; the sieve (43) is arranged below the discharge roller (42); and the control system is configured to drive the discharge roller (42) to rotate; wherein
the travelling component (1) is an XYZ three-axis drive device, and is capable of driving the stirring component (2) to reciprocate along an X, Y or Z direction with respect to the rack (3); and the XYZ three-axis drive device is electrically connected to the control system;
the stirring component (2) comprises a stirring blade (21) and a drive device (22), and the drive device is configured to drive the stirring blade (21) to rotate in a vertical plane;
the drive device (22) comprises a spindle drive motor (221), a stirring spindle (222), a spindle reducer (223), a hollow rotating table (224) and a C-axis motor (225); wherein the spindle drive motor (221) is configured to drive 2. the stirring spindle (222) to rotate; the stirring spindle (222) passes through the hollow rotating table (224) and is configured to drive an output shaft of the spindle reducer (223) to rotate; the output shaft of the spindle reducer (223) is arranged horizontally, and is configured to drive 2. the stirring blade (21) to rotate in a vertical plane;
the C-axis motor (225) is arranged on a side of the stirring spindle (222), and an output shaft of the C-axis motor (225) is configured to drive the spindle reducer (223) to rotate with respect to the stirring spindle (222), and the stirring blade (21) is configured to rotate with the spindle reducer (223) with respect to the stirring spindle (222).

2. The interlayer mixing apparatus according to claim 1, **characterized in that** the pressing component (5) comprises a material distribution belt (53) for flattening and storing the slab material, a rolling belt (54) and a travelling mechanism (55); the material distribution belt (53) and the rolling belt (54) are arranged on the travelling mechanism (55), and the rolling belt (54) is arranged below the material distribution belt (53);
the travelling mechanism (55) is arranged above a material distribution platform and is capable of reciprocating; and the rolling belt (54) is configured to push and squeeze the slab material on the material distribution platform.

3. The interlayer mixing apparatus according to claim 1, **characterized in that** the colourant distribution component (4) and the stirring component (2) are arranged at the same station.

## Patentansprüche

1. Geschichtete Mischvorrichtung zur Bearbeitung einer Textur von Kunststeinplatten, umfassend:
ein Gestell (3);
ein Förderband;
eine Presskomponente (5);
eine Farbstoffverteilungskomponente (4);
eine Rührkomponente (2);
eine Fahrkomponente (1); und
ein Steuerungssystem;
wobei das Förderband so konfiguriert ist, dass es ein Plattenmaterial nacheinander zu den Arbeitsbereichen der Presskomponente (5), der Farbstoffverteilungskomponente (4) und der Rührkomponente (2) transportiert; wobei das Gestell (3) eine Plattform aufweist, um das Plattenmaterial zu tragen, und wobei die Presskomponente (5), die Farbstoffverteilungskomponente (4), die Fahrkomponente (1) und die Rührkomponente (2) jeweils mit dem Steuerungssystem verbunden sind;
wobei das Steuerungssystem so konfiguriert ist, dass es die Presskomponente (5) so einstellt, dass die Presskomponente (5) das Plattenmaterial presst; wobei die Farbstoffverteilungskomponente (4) so konfiguriert ist, dass sie mindestens eine Schicht eines Farbstoffs auf eine Oberfläche des Plattenmaterials verteilt, nachdem es durch die Presskomponente (5) gepresst wurde, oder wobei die Farbstoffverteilungskomponente (4) entsprechend einem Entwurfspfad für eine endgültige Textur so konfiguriert ist, dass sie mindestens eine Schicht des Farbstoffs an entsprechenden Positionen auf der Oberfläche des Plattenmaterials verteilt;
wobei das Steuerungsystem so konfiguriert ist, dass es die Fahrkomponente (1) und die Rührkomponente (2) so einstellt, dass die Fahrkomponente (1) die Rührkomponente (2) so antreibt, dass sie sich über dem gepressten Plattenmaterial entsprechend dem Entwurfspfad für die endgültige Textur bewegt, und wobei gleichzeitig die Rührkomponente (2) so konfiguriert ist, dass sie Mischungen aus dem Farbstoff und dem Plattenmaterial an allen entsprechenden Positionen oder an einem Teil der entsprechenden Positionen auf der Oberfläche des Plattenmaterials rührt;
wobei die Presskomponente (5) und die Rührkomponente (2) jeweils an zwei unabhängigen Stationen angeordnet sind; wobei die Farbstoffverteilungskomponente (4) so konfiguriert ist, dass sie das Farbstoff auf der Oberfläche des gepressten Plattenmaterials verteilt, bevor das gepresste Plattenmaterial in einen Arbeitsbereich der Rührkomponente (2) eintritt;
wobei die Farbstoffverteilungskomponente (4) auf einem Förderweg des Förderbandes angeordnet ist, **dadurch gekennzeichnet, dass** die Farbstoffverteilungskomponente (4) einen Farbstoffverteilungsrichter (41), eine Austragswalze (42) und ein Sieb (43) umfasst; und wobei die Austragswalze (42) an einem Auslass des Farbstoffverteiltrichters (41) angeordnet ist, um das Farbstoff so anzutreiben, dass es auf die Oberfläche des gepressten Plattenmaterials auf dem Förderband fällt; wobei das Sieb (43) unterhalb der Austragswalze ( 42) angeordnet ist; und wobei das Steuerungssystem so konfiguriert ist, dass es die Ausgabewalze (42) zum Drehen antreibt;
wobei die Fahrkomponente (1) eine dreiachsige XYZ-Antriebsvorrichtung ist und die Rührkomponente (2) so antreiben kann, dass sie sich in X-, Y- oder Z-Richtung in Bezug auf den Gestell (3) hin- und herbewegt; und wobei die dreiachsige XYZ-Antriebsvorrichtung elektrisch mit dem Steuerungssystem verbunden ist.
wobei die Rührkomponente (2) ein Rührblatt (21) und eine Antriebsvorrichtung (22) umfasst und die Antriebsvorrichtung so konfiguriert ist, dass sie das Rührblatt (21) so antreibt, dass es sich in einer vertikalen Ebene dreht;
wobei die Antriebsvorrichtung (22) einen Spindelantriebsmotor (221), eine Rührspindel (222), ein Spindeluntersetzungsgetriebe (223), einen hohlen Drehtisch (224) und einen C-Achsen-Motor (225) umfasst; wobei der Spindelantriebsmotor (221) so konfiguriert ist, dass er die Rührspindel (222) zum Drehen antreibt; wobei die Rührspindel (222) durch den hohlen Drehtisch (224) geht und so konfiguriert ist, dass er eine Ausgangswelle des Spindeluntersetzungsgetriebes (223) zum Drehen antreibt; wobei die Ausgangswelle des Spindeluntersetzungsgetriebes (223) horizontal angeordnet und so konfiguriert ist, dass sie das Rührblatt (21) so antreibt, dass es sich in einer vertikalen Ebene dreht;
wobei der C-Achsen-Motor (225) auf einer Seite der Rührspindel (222) angeordnet ist, wobei eine Ausgangswelle des C-Achsen-Motors (225) so konfiguriert ist, dass sie das Spindeluntersetzungsgetriebe (223) antreibt, um sich in Bezug auf die Rührspindel (222) zu drehen, und wobei das Rührblatt (21) so konfiguriert ist, dass es sich mit dem Spindeluntersetzungsgetriebe (223) in Bezug auf die Rührspindel (222) dreht.

2. Geschichtete Mischvorrichtung nach Anspruch 1, **dadurch gekennzeichnet, dass** die Presskomponente (5) ein Materialverteilungsband (53) zum Glätten und Speichern des Plattenmaterials, ein Rollband (54) und einen Fahrmechanismus (55) umfasst, wobei das Materialverteilungsband (53) und das Rollband (54) auf dem Fahrmechanismus (55) angeordnet sind und das Rollband (54) unterhalb des Materialverteilungsbandes (53) angeordnet ist;
wobei der Fahrmechanismus (55) über einer Materialverteilungsplattform angeordnet ist und sich hin- und herbewegen kann; und wobei das Rollband (54) so konfiguriert ist, dass es das Plattenmaterial auf der Materialverteilungsplattform schiebt und zusammendrückt.

3. Geschichtete Mischvorrichtung nach Anspruch 1, **dadurch gekennzeichnet, dass** die Farbstoffverteilungskomponente (4) und die Rührkomponente (2) an derselben Station angeordnet sind.

## Revendications

1. Appareil de mélange intercouche pour le traitement de texture de dalles de pierre artificielle, comprenant :
un support (3) ;
une bande transporteuse ;
un composant de pressage (5) ;
un composant de distribution de colorant (4) ;
un composant d'agitation (2) ;
un composant de déplacement (1) ; et
un système de commande ;
dans lequel la bande transporteuse est configurée pour transporter un matériau en plaque séquentiellement vers des zones de travail du composant de pressage (5), du composant de distribution de colorant (4) et du composant d'agitation (2) ; le support (3) comporte une plate-forme pour transporter le matériau en plaque, et le composant de pressage (5), le composant de distribution de colorant (4), le composant de déplacement (1) et le composant d'agitation (2) sont respectivement connectés au système de commande ;
le système de commande est configuré pour ajuster le composant de pressage (5) de telle sorte que le composant de pressage (5) presse le matériau en plaque ; le composant de distribution de colorant (4) est configuré pour distribuer au moins une couche d'un colorant sur une surface du matériau en plaque après avoir été pressé par le composant de pressage (5), ou selon un chemin de conception pour une texture finale, est configuré pour distribuer au moins une couche du colorant à des positions correspondantes sur la surface du matériau en plaque ;
le système de commande est configuré pour ajuster le composant de déplacement (1) et le composant d'agitation (2) de telle sorte que le composant de déplacement (1) entraîne le composant d'agitation (2) à se déplacer au-dessus du matériau en plaque pressée selon le chemin de conception pour la texture finale; et en même temps, le composant d'agitation (2) est configuré pour remuer des mélanges du colorant et du matériau en plaque au niveau de toutes les positions correspondantes ou d'une partie des positions correspondantes sur la surface du matériau en plaque ;
le composant de pressage (5) et le composant d'agitation (2) sont respectivement disposés au niveau de deux postes indépendants ; le composant de distribution de colorant (4) est configuré pour distribuer le colorant à la surface du matériau en plaque pressée avant que le matériau en plaque pressée n'entre dans une zone de travail du composant d'agitation (2) ;
le composant de distribution de colorant (4) est disposé sur un chemin de transport de la bande transporteuse, **caractérisé en ce que** le composant de distribution de colorant (4) comprend une trémie de distribution de colorant (41), un rouleau de déchargement (42) et un tamis (43) ; le rouleau de déchargement (42) est disposé à une sortie de la trémie de distribution de colorant (41) pour amener le colorant à tomber à la surface du matériau en plaque pressée sur la bande transporteuse ; le tamis (43) est disposé sous le rouleau de déchargement (42) ; et le système de commande est configuré pour entraîner le rouleau de déchargement (42) en rotation ; dans lequel
le composant de déplacement (1) est un dispositif d'entraînement à trois axes XYZ, et est capable d'entraîner le composant d'agitation (2) à effectuer un mouvement alternatif le long d'une direction X, Y ou Z par rapport au support (3) ; et le dispositif d'entraînement à trois axes XYZ est connecté électriquement au système de commande ;
le composant d'agitation (2) comprend une pale d'agitation (21) et un dispositif d'entraînement (22), et le dispositif d'entraînement est configuré pour entraîner la pale d'agitation (21) à tourner dans un plan vertical ;
le dispositif d'entraînement (22) comprend un moteur d'entraînement de broche (221), un arbre d'agitation (222), un réducteur de broche (223), une table tournante creuse (224) et un moteur d'axe C (225) ; dans lequel le moteur d'entraînement de broche (221) est configuré pour entraîner l'arbre d'agitation (222) en rotation ; l'arbre d'agitation (222) traverse la table tournante creuse (224) et est configurée pour entraîner en rotation un arbre de sortie du réducteur de broche (223) ; l'arbre de sortie du réducteur de broche (223) est disposé horizontalement et est configuré pour entraîner la pale d'agitation (21) à tourner dans un plan vertical ;
le moteur de l'axe C (225) est disposé sur un côté de l'arbre d'agitation (222), et un arbre de sortie du moteur de l'axe C (225) est configuré pour entraîner le réducteur de broche (223) à tourner par rapport au l'arbre d'agitation (222), et la pale d'agitation (21) est configurée pour tourner avec le réducteur de broche (223) par rapport à l'arbre d'agitation (222).

2. Appareil de mélange intercouche selon la revendication 1, **caractérisé en ce que** l'élément de pressage (5) comprend une bande de distribution de matériau (53) pour aplatir et stocker le matériau en plaque, une courroie roulante (54) et un mécanisme de déplacement (55) ; la bande de distribution de matériau (53) et la courroie roulante (54) sont disposées sur le mécanisme de déplacement (55), et la courroie roulante (54) est disposée au-dessous de la bande de distribution de matériau (53) ;
le mécanisme de déplacement (55) est disposé au-dessus d'une plateforme de distribution de matériau et est capable d'effectuer un mouvement alternatif ; et la courroie roulante (54) est configurée pour pousser et presser le matériau en plaque sur la plateforme de distribution de matériau.

3. Appareil de mélange intercouche selon la revendication 1, **caractérisé en ce que** le composant de distribution de colorant (4) et le composant d'agitation (2) sont disposés au même poste.
